# EUROPEAN PATENT SPECIFICATION

(11) **EP 1 462 665 B1**
(45) Date of publication and mention of the grant of the patent: **07.06.2006**
(21) Application number: 04075880.7
(22) Date of filing: 18.03.2004
(51) Int. Cl.: F16B 37/04

(54) **Connecting assembly for connecting profiled-section parts to one another**
Verbindungsanordnung zum Verbinden von Profilelementen aneinander
Ensemble de connexion pour connecter des profilés entre eux

(30) Priority: 24.03.2003 NL 1023002
(43) Date of publication of application: 29.09.2004
(73) Proprietor: FLAMCO B.V., NL-2802 AC Gouda (NL)
(72) Inventor: Jaspers, Antonius Nicolaas Johannes, 2804 PH Gouda (NL); Postma, Jan, 3344 AL Hendrik Ido Ambacht (NL); Kemper, Dimitri Wasil, 1019 HX Amsterdam (NL)
(74) Representative: Iemenschot, Johannes Andreas

(56) References cited:
- NL-C- 1 005 552
- US-A- 2 333 388
- US-A1- 2002 121 558
- US-B1- 6 331 092

## Description

The present invention relates to a connecting assembly in accordance with the preamble of claim 1.

A connecting assembly of this type is known from NL-A-1005552. In this known connecting assembly, the projections on a connecting part are located at a distance from one another which is such that, in the situation in which the longitudinal centre axis of the nut element substantially coincides with the common centre axis of the projections, the nut element rests on top of the projections and is pressed onto the projections by a prestress provided by the spring element.

The known connecting assembly has the drawback that in this situation a nut element is not locked against rotation in any further way. As a result, when the connecting assembly is being transported, it may adopt a skew position on the projections and even slip off the projections. This causes problems when the connecting assembly is being mounted on a profiled-section element with a substantially C-shaped cross section with a base wall, two upright side walls which adjoin the base wall and two flanges which adjoin the upright side walls, face one another and between them delimit a longitudinal slot, since the nut element then first of all has to be realigned with the projections.

It is an object of the invention to overcome this drawback.

This object is achieved by a connecting assembly in accordance with claim 1.

With the connecting assembly according to the invention, a nut element will not turn during transport and will always be in the position which is desired for assembly.

US-A-2002/0121558 discloses a fastener of the type similar to the connecting assembly of the invention. A connecting part is provided with two pawls which are diametrically arranged adjacent a through-bore for a connecting bolt in the connecting part. The pawls are insertable in axial direction into grooves arranged in a ring shaped projection on a nut element said ring shaped projection surrounding a threaded bore in the nut element. The pawls are pressed into the grooves under the influence of a spring element between the head of the bolt and the connecting part.

US-A-6,331,092 discloses a corner joint for profile sections. The corner joint has at least one coupling assembly comprising a plate-like connecting part, a connecting bolt and an elongate nut element and a lock means between the connecting part and the nut element. The lock means which can be located in the slot of a profile section is provided with a screw opening and means for locking the nut element against rotation out of a locking position. The lock means is also provided with at least one boss which during rotation of the nut means from its locking position cooperates with a shoulder on the nut element, in order to position the nut element and facilitate its removal from the slot of the profile section. The coupling assembly has no spring element to press the nut element against the lock means and no provisions to ensure that the nut element does not rotate to its locking portion during transport of the corner joint.

Preferred embodiments of the connecting assembly according to the invention are defined in the subclaims.

The invention also relates to a combination of a connecting assembly and at least one profiled-section element according to claim 5.

The invention will be explained in more detail below with reference to the drawing, in which:
- Fig. 1: shows a perspective view of a certain embodiment of a coupling assembly of a connecting assembly according to the invention,
- Fig. 2: shows a view of the coupling assembly shown in Fig. 1 as seen in the direction of arrow II in Fig. 3,
- Fig. 3: shows a side view of the coupling assembly shown in Fig. 1, as seen in the direction of arrow III in Fig. 1,
- Fig. 4: shows a view of the coupling assembly shown in Fig. 1, as seen in the direction of arrow IV in Fig. 3,
- Fig. 5: shows a combination of the coupling assembly from Fig. 1 and a profiled-section element with a substantially C-shaped cross section, immediately after the coupling assembly has been placed onto the profiled-section element and before the coupling assembly has been coupled to the profiled-section element,
- Fig. 6: shows the combination from Fig. 5 after the coupling assembly has been coupled to the profiled-section element,
- Fig. 7-14: show a number of possible embodiments of a connecting assembly according to the invention with two or more coupling assemblies connected to one another.

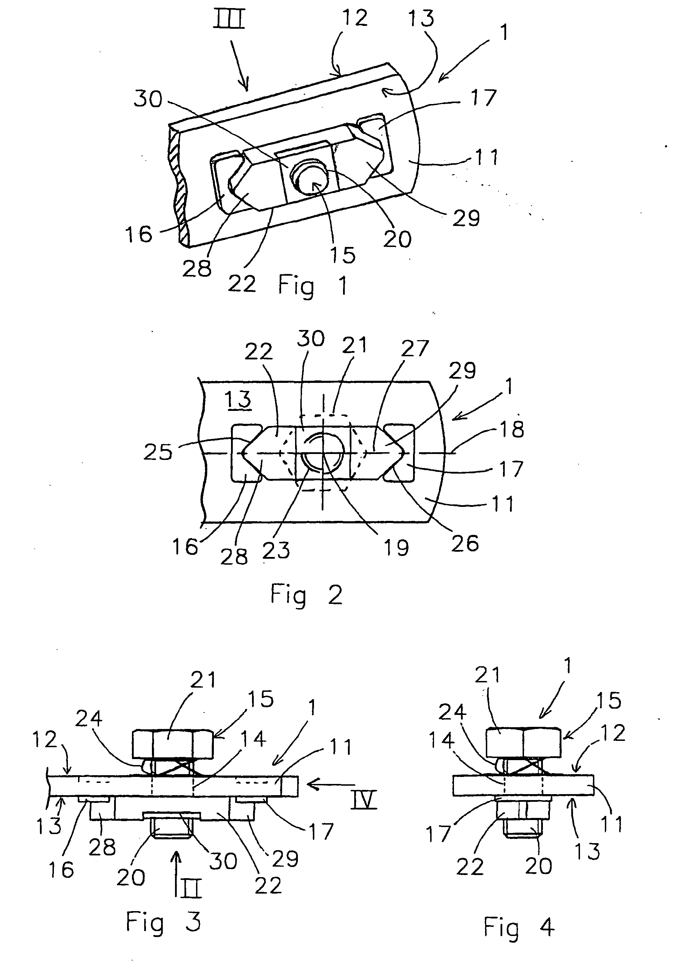

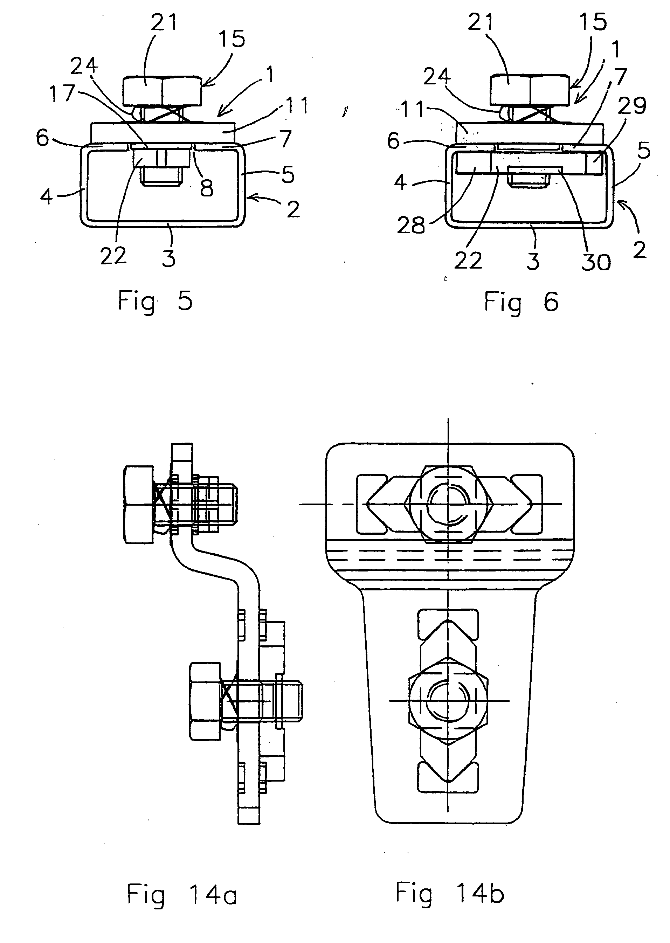

Fig. 1-4 show various views of a coupling assembly 1 of a connecting assembly according to the invention. The connecting assembly is intended to connect a profiled-section element 2, which is illustrated in Fig. 5 and 6 and has a substantially C-shaped cross section with a base wall 3, two upright side walls 4 and 5 adjoining the base wall 3 and two flanges 6 and 7 which adjoin the upright side walls 4 and 5, face one another and between them delimit a longitudinal slot 8, to one or more similar profiled-section elements and/or one or more other elements. The connecting assembly may have a plurality of coupling assemblies.

The coupling assembly 1 comprises a plate-like connecting part 11 which forms part of a connecting element of the connecting assembly. The connecting part has a first side 12 and a second side 13 and is provided with a through-bore 14 which extends from the first side 12 to the second side 13, for a connecting bolt 15 (cf. Fig. 3). A respective projection 16 or 17 is arranged on either side of the through-bore 14, on the second side 13 of the connecting part 11, which projections 16 and 17 have a common centre axis 18 which intersects the centre axis 19 of the through-bore 14 (cf. Fig. 2). The projections 16 and 17 are located at substantially equal distances from the through-bore 14. The projections 16 and 17 can be produced on the connecting part 11 by press-forming of the material of the connecting part 11, as shown in Fig. 3.

Furthermore, the coupling assembly comprises a connecting bolt 15 which passes through the bore 14 and has a threaded shank 20 and a bolt head 21 located on the first side 12 of the plate-like connecting part 11.

On the second side 13 of the plate-like connecting part 11, an elongate nut element 22 with defined transverse and longitudinal dimensions is screwed onto the threaded shank 20 of the connecting bolt 15. In the central region, the nut element 22 is provided with a threaded bore 23.

Between the bolt head 21 and the first side 12 of the connecting part 11, a spring element 24, which is designed to press the bolt head 21 away from the connecting part 11 and in this way to pull the nut element 22 towards the second side 13 of the connecting part 11, is arranged around the shank 20 of the bolt 15. The spring element 24 may take various forms, for example the form illustrated in Fig. 3 and 4 or the form of a coil spring.

The two projections 16 and 17 are located at a distance from one another which is such, and those sides 25 and 26 of the projections 16 and 17 which face one another are shaped in such a manner, that, in the situation in which the longitudinal centre axis 27 of the nut element 22 substantially coincides with the centre axis 18 of the projections 16 and 17, the nut element 22 bears against the second side 13 of the connecting part 11 and is retained between the projections 16 and 17 such that it is locked against rotation. This situation is illustrated in Fig. 2-4.

As a result, when the connecting assembly is being transported, the nut element 22 will not rotate and will always be in the position which is desired for assembly.

In the embodiment illustrated in Fig. 1-4, the end sections 28 and 29 of the nut element 22 are in each case substantially V-shaped, with the points of the V-shaped end sections 28 and 29 facing away from one another. Those sides 25 and 26 of the projections 16 and 17 which face one another are likewise V-shaped, in such a manner that the nut element 22 fits between the projections 16 and 17 with a certain play. The shape of the end sections 28 and 29 of the nut element 22 and of those sides 25 and 26 of the projections 16 and 17 which face one another may, however, also be different. The important factor is that the nut element 22 can be retained in such a manner that it more or less fits between the projections 16 and 17 and can in this way be locked against rotation.

To prevent the bolt 15 from undesirably being unscrewed from the nut element, for example as a result of vibrations, the nut element 22 is provided, at the location of the threaded bore 23, with a frictional part which engages in a slightly clamping manner on the threaded shank 20 of the bolt 15. The friction between the frictional part and the shank 20 of the bolt 15 prevents the bolt 15 from becoming unscrewed in an undesirable manner. In the embodiment illustrated, the frictional part is a plastic part 30 which is fixed in the nut element 22 and is provided with a central bore through which the shank 20 of the bolt 15 fits. The frictional part of the nut element 22 is also useful during fitting of the coupling assembly 1, as will be explained in more detail below.

Fig. 5 shows a combination of the coupling assembly 1 shown in Fig.1 and a profiled-section element 2 immediately after the coupling assembly 1 has been placed onto the profiled-section element 2 and before the coupling assembly 1 has been coupled to the profiled-section element 2. The coupling assembly 1 is positioned with the plate-like connecting part 11 against the profiled-section element 2, with the projections 16 and 17 and the nut element 22 retained between them positioned in the longitudinal slot 8 of the profiled-section element 2. This means that the coupling assembly 1 is in the desired position for coupling.

The dimension of the projections 16 and 17 transversely with respect to the common centre axis 18 thereof is virtually equal to the width of the longitudinal slot 8 of the profiled-section element 2, so that the projections 16 and 17 fit into the longitudinal slot 8 of the profiled-section element with only a small amount of play. The transverse dimensions of the nut element 22 are smaller than the width of the longitudinal slot 8. The maximum longitudinal dimension of the nut element 22, measured along a line which intersects the centre axis 19 of the threaded bore 23, is greater than the distance between the upright side walls 4 and 5 of the profiled-section element 2.

For coupling to the profiled-section element 2, the bolt 15 is pressed downwards, counter to the spring force of the spring 24, and then turned. The nut element 22 then turns with the bolt 15, with the frictional part, in the embodiment illustrated the plastic part 30, of the nut element 15 ensuring additional friction between the shank 20 of the bolt 15 and the nut element 22, until the end sections 28 and 29 of the nut element 22 come to bear against the upright side walls 4 and 5 of the profiled-section element 2. On account of the fact that the maximum longitudinal dimension of the nut element is larger than the distance between the upright side walls 4 and 5 of the profiled-section element 2, the nut element 22 cannot rotate further. The end sections 28 and 29 of the nut element 22 engage beneath the flanges 6 and 7 of the profiled-section element 2. When the bolt 15 is tightened further, the plate-like connecting part 11 can be clamped securely to the profiled-section element 2. The coupling assembly 1 is then coupled to the profiled-section element 2. This situation is illustrated in Fig. 6.

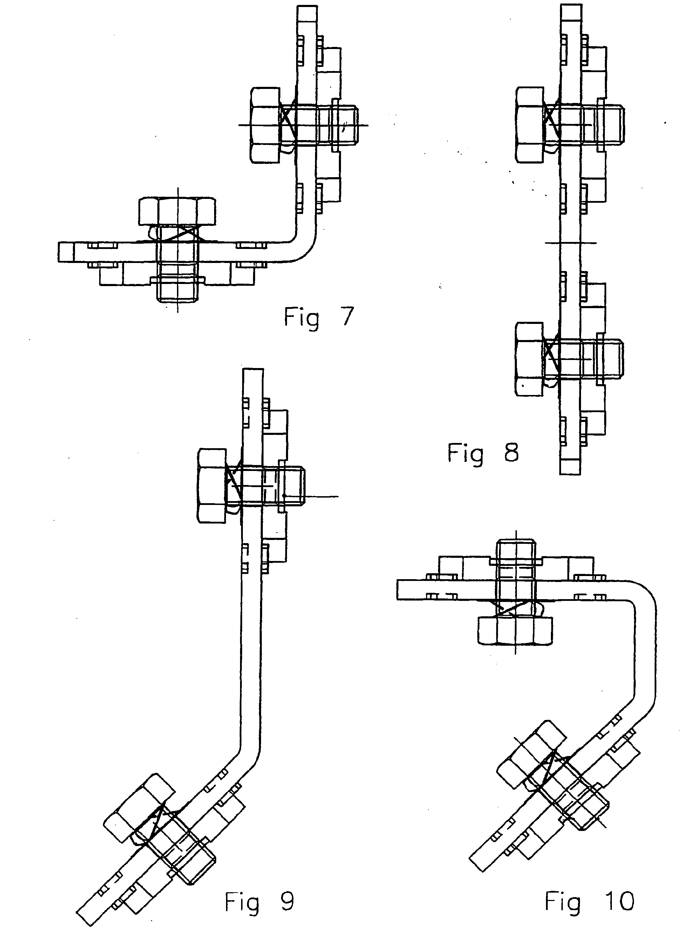

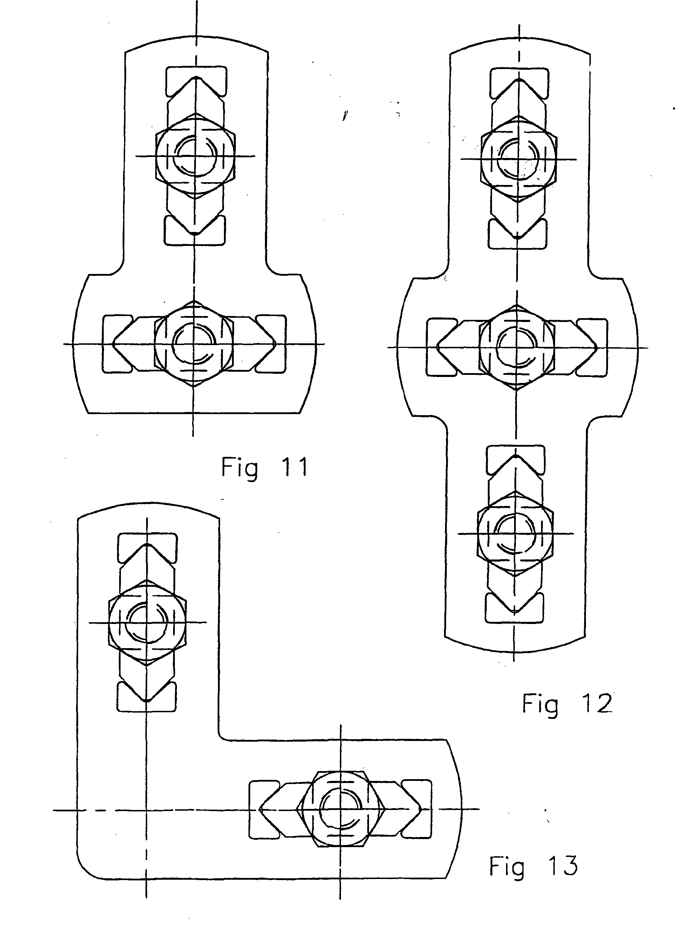

Fig. 7-14 show a number of possible embodiments of a connecting assembly according to the invention with two or more coupling assemblies connected to one another. Still further embodiments are conceivable, depending on the particular application. It is also possible for a coupling assembly according to the invention to be connected to a different type of coupling member, for example a coupling member having a plate-like connecting part with one or more holes through which securing screws can be fitted.

It will be clear that the application is not restricted to the embodiments described. Other embodiments which fall within the scope of protection of the claims are also possible.

## Claims

1. Connecting assembly for connecting a profiled-section element (2) with a substantially C-shaped cross section with a base wall (3), two upright side walls (4, 5) which adjoin the base wall and two flanges (6, 7) which adjoin the upright side walls, face towards one another and between them delimit a longitudinal slot (8), to one or more similar profiled-section elements and/or one or more other elements, which connecting assembly comprises a connecting element and at least one coupling assembly (1) for coupling a profiled-section element to the connecting element, which coupling assembly comprises:
- a plate-like connecting part (11) which forms part of the connecting element, has a first side (12) and a second side (13) and is provided with a through-bore (14), which extends from the first side to the second side, for a connecting bolt (15), a projection (16, 17) being arranged on either side of the through-bore on the second side (13) of the connecting part, which projections (16, 17) have a common centre axis (18) which intersects the centre axis (19) of the through-bore, and are located at substantially the same distance from the through-bore,
- a connecting bolt (15) which fits through the bore (14) in the connecting part (11) and has a threaded shank (20) and a bolt head (21) located on the first side (12) of the plate-like connecting part (11),
- an elongate nut element (22) with defined transverse and longitudinal dimensions, which in the central region is provided with a threaded bore (23) and on the second side (13) of the plate-like connecting part (11) is screwed onto the threaded shank (20) of the connecting bolt (15), and
- a spring element (24), which is arranged between the bolt head (21) and the first side (12) of the connecting part (11), around the shank (20) of the bolt (15), and is designed to press the bolt head away from the connecting part and thereby to press the nut element (22) towards the second side (13) of the connecting part (11),
**characterized in that** the sides (25, 26) of the projections (16, 17) which face towards one another are shaped as a recess, the end sections (28, 29) of the nut element (22) are complementary to said sides (25, 26) of the projections (16, 17), and the distance between the projections is such that, in the situation in which the longitudinal centre axis of the nut element (22) substantially coincides with the centre axis (18) of the projections (16, 17), the nut element (22) bears against the second side (13) of the connecting part (11) and fits between the projections (16, 17) in such a manner that it is locked against rotation in both directions.

2. Connecting assembly according to claim 1, in which the end sections (28, 29) of the nut element (22) are each substantially V-shaped, the points of the V-shaped end sections facing away from one another, and those sides (25, 26) of the projections (16, 17) which face one another are likewise V-shaped, in such a manner that the nut element (22) fits with a certain play between the projections (16, 17).

3. Connecting assembly according to claim 1 or 2, in which the nut element (22) is provided, at the location of the threaded bore (23), with a frictional part which to some extent engages in a clamping fashion on the threaded shank (20) of the bolt (15).

4. Connecting assembly according to claim 3, in which the frictional part is a plastic part (30) which is fixed in the nut element (22) and is provided with a central bore through which the shank (20) of the bolt (15) fits.

5. Combination of a connecting assembly according to one of the preceding claims and at least one profiled-section element (2) which is coupled to the connecting assembly and has a substantially C-shaped cross section with a base wall (3), two upright side walls (4, 5) which adjoin the base wall and two flanges (6, 7) which adjoin the upright side walls, face towards one another and between them delimit a longitudinal slot (8), **characterized in that** the dimension of the projections (16, 17) of the coupling assembly of the connecting assembly, transversely with respect to the common centre axis (18) thereof, is virtually equal to the width of the longitudinal slot (8) in the profiled-section element (2), and the transverse dimensions of the nut element (22) of the coupling assembly (1) of the connecting assembly are smaller than the width of the longitudinal slot of the profiled-section element, and the maximum longitudinal dimension of the nut element (22), measured along a line which intersects the centre axis of the threaded bore (23), is larger than the distance between the upright side walls (4, 5) of the profiled-section element.

## Patentansprüche

1. Verbindungsanordnung zum Verbinden von Profilelementen (2) mit einem im wesentlichen C-förmigen Querschnitt mit einer Bodenwand (3), zwei aufrecht stehenden Seitenwänden (4, 5), die an die Bodenwand angrenzen, und zwei Flanschen (6,7) die an die aufrecht stehenden Seitenwände angrenzen, einander zugewandt sind und zwischen sich einen Längsschlitz (8) begrenzen, mit einem oder mehreren, ähnlichen Profilelementen und/ oder einem oder mehreren anderen Elementen, wobei die Verbindungsanordnung ein Verbindungselement und wenigstens eine Kopplungsanordnung (1) aufweist, um ein Profilelement mit dem Verbindungselement zu koppeln, wobei die Kopplungsanordnung aufweist:
- einen plattenartigen Verbindungsteil (11), der Teil des Verbindungselementes bildet, eine erste Seite (12) und eine zweite Seite (13) hat und mit einer Durchgangsbohrung (14), die sich von der ersten Seite zu der zweiten Seite erstreckt, für einen Verbindungsbolzen (15) versehen ist, wobei ein Vorsprung (16, 17) auf jeder Seite der Durchgangsbohrung auf der zweiten Seite (13) des Verbindungsteils angeordnet ist, wobei die Vorsprünge (16, 17) eine gemeinsame Mittelachse (18) haben, die die Mittelachse (19) der Durchgangsbohrung schneidet, und unter im wesentlichen den gleichen Abstand von der Durchgangsbohrung angeordnet sind,
- einen Verbindungsbolzen (15), der durch die Bohrung (14) in dem Verbindungsteil (11) paßt und einen Gewindezapfen (20) und einen Bolzenkopf (21) hat, der auf der ersten Seite (12) des plattenartigen Verbindungsteils (11) liegt,
- ein längliches Mutterelement (22) mit definierten Quer- und Längsabmessungen, das in dem zentralen Bereich mit einer Gewindebohrung (23) versehen und auf der zweiten Seite (13) des plattenartigen Verbindungsteils (11) auf den Gewindezapfen (20) des Verbindungsbolzens (15) aufgeschraubt ist, und
- ein Federelement (24), das zwischen dem Bolzenkopf (21) und der ersten Seite (12) des Verbindungsteils (11) um den Schaft (20) des Bolzens (15) herum angeordnet ist und dafür ausgelegt ist, den Bolzenkopf von dem Verbindungsteil wegzudrücken und **dadurch das** Mutterelement (22) zu der zweiten Seite (13) des Verbindungsteils (11) hinzudrücken,
**dadurch gekennzeichnet, dass** die Seiten (25, 26) der Vorsprünge (16, 17), die einander zugewandt sind, als eine Ausnehmnung geformt sind, dass die Endabschnitte (28, 29) des Mutterelements (22) komplementär zu den Seiten (25, 26) der Vorsprünge (16, 17) geformt sind und der Abstand zwischen den Vorsprüngen so gewählt ist, dass in der Situation, in der die Längsmittelachse des Mutterelements (22) im wesentlichen mit der Mittelachse (18) der Vorsprünge (16, 17) zusammenfällt, das Mutterelement (22) gegen die zweite Seite (13) des Verbindungsteils (11) drückt und zwischen die Vorsprünge (16, 17) in solch einer Weise paßt, dass es gegen eine Drehung in beiden Richtungen gesperrt ist.

2. Verbindungsanordnung nach Anspruch 1, in der die Endabschnitte (28, 29) des Mutterelements (22) jeweils im Wesentlichen V-förmig sind, wobei die Spitzen der V-förmigen Endabschnitte voneinander weg gerichtet sind, und bei der die Seiten (25, 26) der Vorsprünge (16, 17), die einander zugewandt sind, ebenfalls V-förmig sind in solch einer Weise, dass das Mutterelement (22) mit einem gewissen Spiel zwischen die Vorsprünge (16, 17) paßt.

3. Verbindungsanordnung nach Anspruch 1 oder 2, in der das Mutterelement (22) an dem Ort der Gewindebohrung (23) mit einem Reibungsteil versehen ist, der bis zu einem gewissen Maße klemmend auf den Gewindeschaft (20) des Bolzens (15) angreift.

4. Verbindungsanordnung nach Anspruch 3, in der der Reibungsteil ein Kunststoffteil (30) ist, der in dem Mutterelement (22) fixiert ist und mit einer zentralen Bohrung versehen ist, durch die der Schaft (20) des Bolzens (15) passt.

5. Kombination einer Verbindungsanordnung nach einem der vorhergehenden Ansprüche und wenigstens einem Profilelement (2), das mit der Verbindungsanordnung gekoppelt ist und einen im wesentlichen C-förmigen Querschnitt mit einer Bodenwand (3), zwei aufrechtstehenden Seitenwänden (4, 5), die an die Bodenwand angrenzen, und zwei Flanschen (6, 7), die an die aufrechtstehenden Seitenwände angrenzen, aufeinander zugerichtet sind und zwischen sich einen Längsschlitz (8) begrenzen, **dadurch gekennzeichnet, dass** die Abmessung der Vorsprünge (16, 17) der Kopplungsanordnung der Verbindungsanordnung quer im Bezug auf die gemeinsame Mittelachse (18) davon im wesentlichen gleich der Breite des Längsschlitzes (8) in dem Profilelement (2) ist, **und dass** die Querabmessungen des Mutterelements (22) der Kopplungsanordnung (1) der Verbindungsanordnung kleiner sind als die Breite des Längsschlitzes des Profilelements, und dass die maximale Längsabmessung des Mutterelements (22) gemessen entlang einer Linie, die die Mittelachse der Gewindebohrung (23) schneidet, größer ist als der Abstand zwischen den aufrecht stehenden Seitenwänden (4, 5) des Profilelements.

## Revendications

1. Ensemble de connexion pour connecter un élément profilé (2) présentant une section transversale essentiellement en forme de C comprenant une paroi de base (3), deux parois latérales dressées (4, 5) contiguës à la paroi de base et deux brides (6, 7) contiguës aux parois latérales dressées, se faisant mutuellement face et définissant entre elles une fente longitudinale (8), à un ou plusieurs éléments profilés similaires et/ou à un ou plusieurs autres éléments, ledit ensemble de connexion comprenant un élément de connexion et au moins un ensemble de couplage (1) pour coupler un élément profilé à l'élément de connexion, ledit ensemble de couplage comprenant:
- une pièce de connexion en forme de plaque (11) faisant partie de l'élément de connexion, présentant un premier côté (12) et un deuxième côté (13) et comportant un alésage traversant (14) s'étendant à partir du premier côté jusqu'au deuxième côté, pour un boulon de connexion (15), une saillie (16, 17) étant prévue de part et d'autre de l'alésage traversant sur le deuxième côté (13) de la pièce de connexion, lesdites saillies (16, 17) présentant un axe central commun (18) coupant l'axe central (19) de l'alésage traversant et étant situées à essentiellement la même distance de l'alésage traversant,
- un boulon de connexion (15) qui s'agence à travers l'alésage (14) dans la pièce de connexion (11) et comprenant une tige filetée (20) et une tête de boulon (21) située sur le premier côté (12) de la pièce de connexion en forme de plaque (11),
- un élément d'écrou allongé (22) présentant des dimensions transversale et longitudinale définies et comportant dans sa région centrale un alésage fileté (23) et qui, sur le deuxième côté (13) de la pièce de connexion en forme de plaque (11), est vissé sur la tige filetée (20) du boulon de connexion (15), et
- un élément de ressort (24) agencé entre la tête de boulon (21) et le premier côté (12) de la pièce de connexion (11) autour de la tige (20) du boulon (15) et conçu pour pousser la tête de boulon à l'écart de la pièce de connexion et pousser ainsi l'élément d'écrou (22) en direction du deuxième côté (13) de la pièce de connexion (11),
**caractérisé en ce que** les côtés (25, 26) des saillies (16, 17) se faisant mutuellement face se présentent sous la forme d'un évidement, les sections d'extrémité (28, 29) de l'élément d'écrou (22) sont configurées d'une façon complémentaire auxdits côtés (25, 26) des saillies (16, 17), et la distance entre les saillies est telle que, dans la situation où l'axe central longitudinal de l'élément d'écrou (22) coincide essentiellement avec l'axe central (18) des saillies (16, 17), l'élément d'écrou (22) appuie contre le deuxième côté (13) de la pièce de connexion (11) et s'agence entre les saillies (16, 17) de telle sorte qu'il soit empêché de tourner dans les deux directions.

2. Ensemble de connexion selon la revendication 1, dans lequel les sections d'extrémité (28, 29) de l'élément d'écrou (22) sont chacune essentiellement en forme de V, les pointes des sections d'extrémité en forme de V se faisant mutuellement face, et les côtés (25, 26) des saillies (16, 17) opposés l'un à l'autre étant eux aussi en forme de V, de telle sorte que l'élément d'écrou (22) s'agence avec un certain jeu entre les saillies (16, 17).

3. Ensemble de connexion selon la revendication 1 ou 2, dans lequel l'élément d'écrou (22) présente, à l'endroit de l'alésage fileté (23), une partie de frottement qui s'engage dans une certaine mesure d'une façon serrée sur la tige filetée (20) du boulon (15).

4. Ensemble de connexion selon la revendication 3, dans lequel la partie de frottement est une pièce de plastique (30) fixée dans l'élément d'écrou (22) et comportant un alésage central à travers lequel la tige (20) du boulon (15) s'agence.

5. Combinaison d'un ensemble de connexion selon l'une des revendications précédentes et d'au moins un élément profilé (2) couplé à l'ensemble de connexion et présentant une section transversale essentiellement en forme de C avec une paroi de base (3), deux parois latérales dressées (4, 5) contiguës à la paroi de base, et deux brides (6, 7) contiguës aux parois latérales dressées, situées l'une en face de l'autre et délimitant entre elles une fente longitudinale (8), **caractérisée en ce que** la dimension des saillies (16, 17) de l'ensemble de couplage de l'ensemble de connexion, transversalement par rapport à l'axe central commun (18) de celui-ci, est virtuellement égale à la largeur de la fente longitudinale (8) dans l'élément profilé (2), et les dimensions transversales de l'élément d'écrou (22) de l'ensemble de couplage (1) de l'ensemble de connexion sont plus petites que la largeur de la fente longitudinale de l'élément profilé, et la dimension longitudinale maximum de l'élément d'écrou (22), mesurée le long d'une ligne coupant l'axe central de l'alésage fileté (23), est plus grande que la distance entre les parois latérales dressées (4, 5) de l'élément profilé.
